Europäisches Patentamt

European Patent Office

Office européen des brevets

(11) Publication number: **0 441 212 A2**

# EUROPEAN PATENT APPLICATION

(21) Application number: **91101040.3**

(51) Int. Cl.5: **H02J 7/14**

(22) Date of filing: **28.01.91**

(30) Priority: **08.02.90 IT 1929890**

(43) Date of publication of application:
**14.08.91 Bulletin 91/33**

(84) Designated Contracting States:
**DE ES FR GB**

(71) Applicant: **Caprile, Mario Nobile**
**Via Sardegna 38**
**I-20146 Milan(IT)**

(72) Inventor: **Caprile, Mario Nobile**
**Via Sardegna 38**
**I-20146 Milan(IT)**

(74) Representative: **Robba, Eugenio et al**
**Studio "INTERPATENT" via Caboto 35**
**I-10129 Turin(IT)**

(54) **A battery charging device.**

(57) A device for charging batteries that require a frequent a periodical charging, such as batteries for lift trucks, electric drive vehicles, oil drilling rigs and the like.

The device of the invention preferably comprises an electric motor (1) fed by the voltage of a network (5), and coupled with an alternator (2) driven into rotation by the electric motor (1). The shaft of the electric motor (1) is coupled with the alternator (2) through a belt (14, 14A, 14B) and pulley (12, 13) drive. The voltage generated by the alternator is rectified by a rectifying circuit (3) the output of which charges the battery (10). The rectifying circuit can possibly be incorporated within the alternator together with a regulator (3A).

There is provided a control board (4) that in accordance with the charge state of the battery (10) detected through sensors (6) enables or inhibits the current flow, e.g. by deenergizing the motor (1) or by disengaging the mechanical connection between the motor (1) and the alternator (2).

Fig.1

## A BATTERY CHARGING DEVICE

The present invention concerns a device for charging batteries, such as batteries for lift trucks, boats, electric drive vehicles, oil drilling rigs, etc.

The batteries of this kind require a periodical charging, typically after a work shift for the lift trucks, and generally at the end of the day for the electric cars.

There are known static charging devices for batteries comprising a step-down transformer having the primary winding connected to the A.C. network (e.g. 220 or 380 V), and the secondary winding connected to a rectifying circuit supplying a constant output voltage (such as 12 or 24 V). These devices only allows for a manual regulation or setting of the charging current which therefore can only be changed stepwise through a multiple contact switch, e.g. through a discrete current increase between a switch position and the next one.

Therefore when using these devices the battery is charged at a fixed current set by the user, often at high values in order to reduce the charging times. This way the charge is not accomplished through a cycle corresponding to the optimum cycle, and this results in a shortening of the average useful life of the battery, or in permanent damages when the charging current is excessive.

Moreover, these known devices are generally not able to supply also additional apparatuses, particularly during the battery charging.

Finally when large charging currents are really requested, the known devices become of large weight and size.

The object of the invention is to overcome the above illustrated inconveniences of the known devices, and more particularly to realize a device for battery charging which is capable of supplying a charging current that is precisely selected according to the electrical state or condition of the battery to be charged, as well as of supplying a large current, if so requested, to other apparatuses connected to the battery, also during the charging. Such currents can be for example in the order of 100-250 A and larger, and the above objects are achieved with a device of reduced size.

These objects are accomplished through a device for battery charging, characterized in that it comprises:

a rotary motor actuated by a power source;

an alternator mechanically coupled to and driven into rotation by said motor;

a rectifier circuit the input of which is connected to the output of the alternator for supplying a D.C. output voltage; and

means for controlling the current supplied by the rectifier in response to information signals from sensors of the state of charge of the battery to be charged.

Further advantageous characteristics are to be found in the dependent claims.

The invention will now be described with reference to a few preferred but non-limiting embodiments, together with the attached drawings in which:

Fig. 1 shows a general block diagram of the device according to the invention;

Fig. 2 shows an embodiment of the invention with an external starter motor;

Fig. 3 shows an embodiment of the invention with an incorporated starter motor;

Fig. 4 illustrates a further embodiment of the invention; and

Fig. 5 is a schematic cross section of a motor-alternator arrangement according to the invention.

Through all the Figures components that are equal or substantially similar are designated by the same numeral references, in case with an added letter when the analogy is only a partial one.

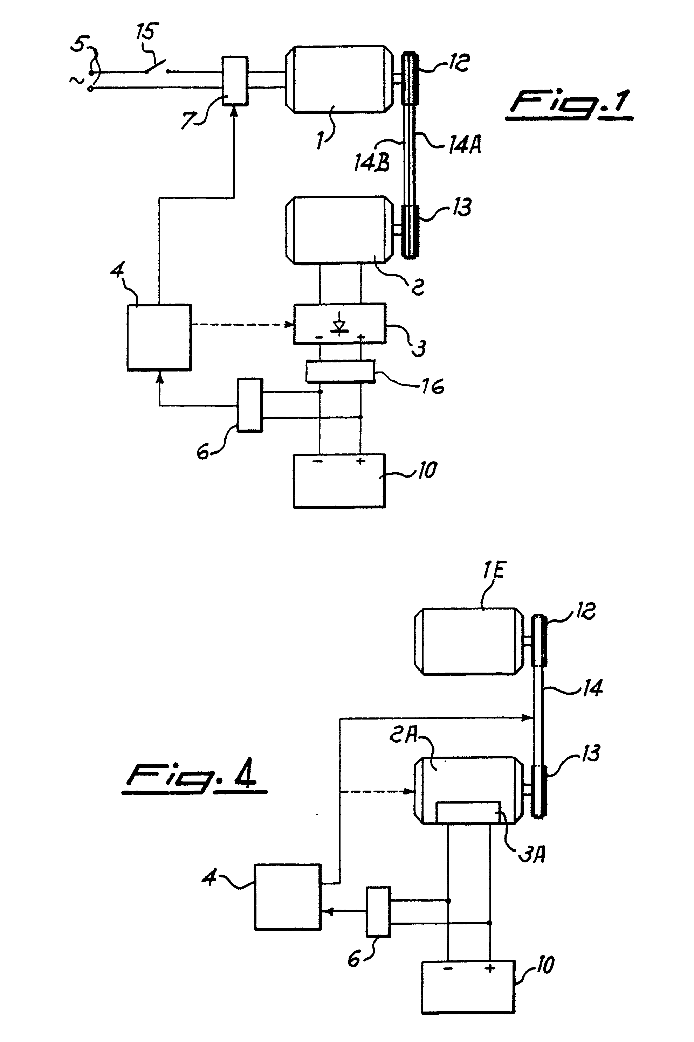

With reference to Fig. 1, the device according to the invention comprises a rotary motor 1 connected to a power source able keep it rotating at the desired speed.

In the embodiment shown in Fig. 1 such motor is an A.C. electric motor connected through a switch 15 to an A.C. voltage feed network 5 that can be, for example, the 220 V or 380 V mains network, either single-phase or three-phase. Of course the motor 1 can be of a different type, e.g. an internal combustion engine, a pressurized air motor, a wind actuated motor, etc. associated with a corresponding power supply source.

The electric motor 1 is mechanically coupled to an alternator 2 through at least a belt extending over two pulleys 12 and 13 carried by the shaft of the electric motor and by the shaft of the alternator, respectively. Preferably, as shown in Fig. 1, there are used two belts 14A and 14B located side-by-side.

The belt and pulley coupling has been found to be of advantage in that it eliminates possible problems deriving from mechanical vibrations and forces that might be transmitted between the two machines, but the coupling can be realized also through articulated joints and the like equipped with leather or rubber projections, or through a fluid drive, e.g. an hydraulic drive.

The belt and pulley coupling is further advantageous when the motor and the alternator rotate at different speeds and a transmission ratio different from 1 is requested. As an example, when using a 1,000 rpm alternator and a 2950 rpm bipolar motor, the requested transmission ratio can be easily accomplished by means of pulleys having different and proper diameters.

In the illustrated embodiment, the alternator 2 is adapted to supply a low output voltage (12 and/or 24 V) and such output is connected to a rectifying circuit 3 supplying a D.C. output voltage, e.g. 12 or 24 V. The output of the rectifier 3 is connected to the battery 10 to be charged.

A voltage regulator can be provided between the output of the rectifier 3 and the battery in order to eliminate a ripple voltage that may be present there. Such voltage regulator can comprise, for example and in a manner known per se, a filter impedance, a complete passive filter or an electronic regulating circuit, in case as an I.C. device.

Moreover sensors are provided that are capable of sensing the battery state, that are schematically shown by block 6. These sensors typically comprise at least a voltage sensor of the output voltage of battery 10.

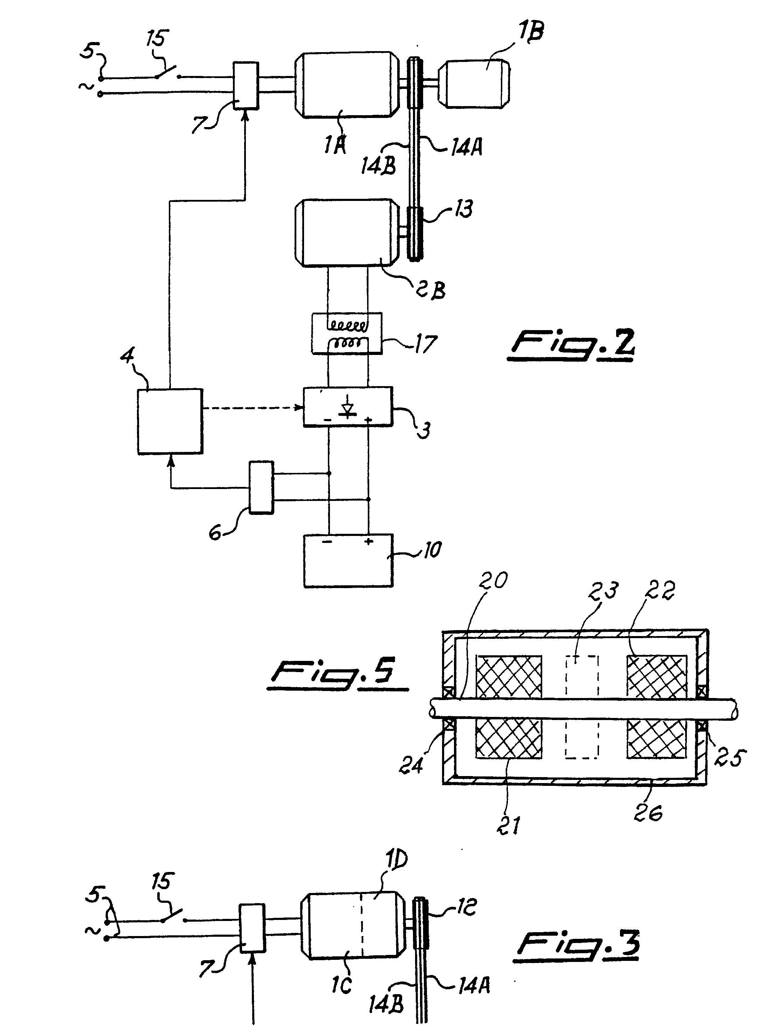

Usually the rectifier comprises a circuit for regulating the charging current and both these circuits can be incorporated together in the construction of the alternator, as will be illustrated later with reference to the embodiment of Fig. 4.

The control circuit 4, preferably realized with an electronic (printed circuit) board, is connected to the sensors 6 and is used to control the state of charge of the battery 10.

In accordance with the embodiment illustrated in Fig. 1, the control board 4 controls a switch or a remote control switch 7 inserted between the power supply network 5 and the motor 1, by closing this switch, i.e. feeding the motor, only when the voltage of battery 10 drops below a predetermined threshold. In the same way, when the voltage of the charged battery exceedes a second predetermined threshold, the board 4 automatically commands the opening of the switch thus interrupting the working of the battery charger.

Thus it is clear that in case the battery does not require a charging, e.g. because of a very modest usage, the battery charger will not start working. According to another embodiment, in lieu of a remote control switch an electromagnetic pulley can be employed that disengages the motor pulley under control of the board 4.

As an alternative which is shown with dashed line, the board 4 can act on the rectifier 3 excluding this latter (thus interrupting the battery charging) without stopping the motor 1. Such an arrangement can be useful for example when the motor 1 is of the internal combustion type.

As it will be illustrated with reference to the embodiment shown in Fig. 2, the control board 4 can act on the belt and pulley coupling disengaging the alternator without stopping the motor.

In the embodiment shown in Fig. 2, there is provided a main motor 1A and an additional starter motor 1B, selectively connectable to the pulley of motor 1A which is used in the steady state working. The starter motor is used to drive the system up to the stedy state speed without a large current absorption in the transient, for example in order to maintain the current drawn from the line below 12 Amperes and thus preventing the intervention of the current limiters usually present in the line, or avoiding the necessity of the replacement thereof. Thanks to such measure, the requirements of the power to be kept available from the mains line is further reduced, this feature being for example of particular advantage when the invention is applied to row of charging boxes in piers or common installments.

As an alternative, as shown in Fig. 3 wherein for sake of simplicity only a part of the device is illustrated, the electric motor can be made up by two motors 1C and 1D coaxially mounted and selectively connectable, or by a structure having a common stator and two coaxial rotors.

Turning back to the embodiment shown in Fig.2, the device according to the invention can further include a copupling transformer 17 connected between the alternator 2B and the rectifier 3. The alternator 2B is of the single-phase type and is able to supply a relatively high voltage, e.g. 220 v, and the transformer 17 is a step-down transformer with a proper turns ratio.

The above arrangement allows for an improved drive of the alternator, particularly when the machine is cold. Namely, it has been found that using conventional alternators having a low voltage output, such as for example those employed in motor cars and the like, they draw a large power, even double of the nominal one, until they reach a working temperature that is sufficiently high, which can take several minutes. By using the transformer 17 it is possible to prevent such increase of the drawn power from the electric line (through the motor 1) that anyhow could not be transferred at the alternator output due to the characteristics of the capacitive drive circuit (that cannot be modified).

It is evident that two or more of the features shown in the Figures 1 to 3 can be combined together in several ways, e.g. by providing a single-phase alternator with a 220 V output and a transformer in the arrangement shown in Fig. 1, or a voltage regulator in the embodiment of Fig. 2, and so on.

Fig. 4 schematically shows a further embodiment of the device according to the invention.

As mentioned above, this embodiment provides that the rectifier and the regulation circuit (designated on the whole as 3A) are incorporated within the alternator 2A and that the board 4 acts on the drive coupling between motor 1 and generator 2, e.g. on an electromagnetic or electromechanical pulley. Such arrangement is common for example in alternators supplying a 12 or 24 V output voltage. For higher voltages, such as 48 V or more, the rectifier-regulator assembly can be located outside the alternator.

In case the alternator does not include a regulation circuit, this latter which is either of the electronic or mechanical type, can be incorporated in the control board 4. When the motor 1 is a variable speed D. C. motor, the board can directly act on the motor. In this embodiment of the invention the sensors 6 also include a charging current sensor.

Fig. 5 shows still another embodiment of the device of the invention in which the electric motor ad the alternator are incorporated into a single unit having a case 26 housing a shaft 20 mounted on end bearings 24 and 25 and carrying two rotor windings, more precisely a winding 21 acting as a motor and a winding 22 acting as an alternator, respectively. A common stator winding is further housed within the case 26 and not shown for sake of simplicity. Thanks to this arrangement, the device of the invention no longer requires a belt and pulley drive coupling and the size and the costs of the device are further reduced since only two bearings are requested. Moreover, an additional rotor winding 23 (shown by dashed lines) can be secured to the common shaft 20 for acting as a started motor which is later deenergized when the assemby reaches the steady state speed.

The device results in being of reduced weight with respect to the battery chargers of known type: as an indication only, a battery charger according to the invention having a power capacity of 120 A at 12 V has a weight lesser than 40 kg.

An additional advantage of the invention when this latter is employed for charging boat batteries on piers, is that it allows for the charging also with the apparatuses and onboard services in function, which loads draw a high current.

Although the invention has been described with particular reference to a preferred embodiment, the same is not to be considered as limited to such embodiment but it covers all the obvious modifications and changes that will be evident to the skilled in the art.

## Claims

1. A device for battery charging, characterized in that it comprises:

   a rotary motor (1) actuated by a power source;

   an alternator (2) mechanically coupled to and driven into rotation by said motor (1);

   a rectifier circuit (3) the input of which is connected to the output of the alternator (2) for supplying a D.C. output voltage; and

   means (4) for controlling the current supplied by the rectifier (3) in response to information signals from sensors (6) of the state of charge of the battery (10) to be charged.

2. A device as claimed in claim 1, characterized in that said rotary motor is an A.C. electric motor connected to an A.C. feed network (5).

3. A device as claimed in claim 2, characterized in that it provides for an additional starter electric motor (1B) that can be connected to said alternator (2) as an alternative to said main motor (1A).

4. A device as claimed in claim 2, characterized in that said electric motor comprises two coaxially mounted and selectively connectable motors (1C, 1D), respectively, for the start and the steady state running.

5. A device as claimed in claim 2 or 3, characterized in that said alternator (2B) has an output voltage higher than 100 V and that a step-down transformer (17) is connected between the output of said alternator (2A) and said rectifier (3).

6. A device as claimed in claim 4 or 5, characterized in that it comprises a voltage regulator (16) between the output of said rectifier (3) and the battery (10) to be charged.

7. A device as claimed in any claims 1 to 6, characterized in that said board (4) controls a remote control switch (7) connected between the motor (1) and said feed network (5).

8. A device as claimed in any claims 1 to 6, characterized in that said board (4) controls the mechanical coupling between the motor (1E) and the alternator (2A), and that said coupling provides for at least one belt (14) extending over two pulleys (12, 13) that are secured to the shaft of the motor (1E) and the shaft of the alternator (2A), respectively.

9. A device as claimed in claim 5 or 6, characterized in that said board (4) controls the connection between said rectifier (3) and the battery (10) to be charged.

10. A device as claimed in claim 1, characterized in that said electric motor ad the alternator are incorporated into a single unit having a case (26) housing a shaft (20) mounted on end bearings (24, 25) and carrying two rotor windings, more precisely a winding (21) acting as a motor and a winding (22) acting as an alternator, respectively.

*Fig.1*

*Fig.4*

*Fig.2*

*Fig.5*

*Fig.3*